(19) Europäisches Patentamt
European Patent Office
Office européen des brevets

(11) Publication number: **0 507 031 A1**

(12) **EUROPEAN PATENT APPLICATION**

(21) Application number: **91309943.8**

(22) Date of filing: **28.10.91**

(51) Int. Cl.5: **C08G 59/54**, C08G 59/56, C08G 59/50

(30) Priority: **01.04.91 US 677922**

(43) Date of publication of application: **07.10.92 Bulletin 92/41**

(84) Designated Contracting States: **DE FR GB**

(71) Applicant: **TEXACO CHEMICAL COMPANY**
**3040 Post Oak Boulevard**
**Houston, Texas 77056(US)**

(72) Inventor: **Alexander, David Christopher**
**4900 Black Angus Cove**
**Austin, TX 78759(US)**
Inventor: **Sellstrom, Kathy Beth**
**613 Black Locust**
**Pflugerville, TX 78660(US)**

(74) Representative: **Brock, Peter William et al**
**UROUHART-DYKES & LORD 91 Wimpole Street**
**London W1M 8AH(GB)**

(54) **Isophthalmidoamine epoxy curing agent.**

(57) Epoxy resin composition comprising a vicinal polyepoxide having an average of at least 1.8 reactive 1,2-epoxy groups per molecule, can be cured by an isophthalamido amine curing agent having the formula:

$C_6H_4(CONH-R^1-CH_2CH_2NH_2)_2$

wherein $C6_2H_4$ is **meta**-phenylene, and $R^1$ is an oxyethylene group of the formula:

$-(CH_2CH_2O)_x-$

wherein x is 1 to 3.

In a preferred embodiment, the curing agent may be used with a co = curng agent having the formula:

$H_2N-R^2-CH_2CH_2NH_2$

wherein R has the formula:

$-(CH_2CH_2O)_x-$

wherein x is 1 to 3 or the formula:

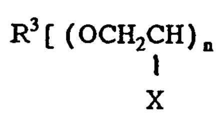

EP 0 507 031 A1

This invention relates to amidoamines prepared from isophthalic acid and a polyoxyethyleneamine as curing agents for epoxy resin.

Epoxy resins constitute a broad class of polymeric materials having a wide range of physical properties. The resins are characterized by epoxide groups which are cured by reaction with curing agents selected to provide cured epoxy resin compositions with certain desirable properties.

US-A-4853456 teaches a thermoset epoxy resin composition comprising an epoxy base resin and a curing agent composition. The composition comprises isophthalamidoamines or terephthalamidoamines. The amino moiety is a selected polyoxypropylene diamine. An aliphatic polyetheramine, aromatic amine or mixture thereof can be used as a co-curing agent.

US-A-4814415 teaches a thermoset epoxy resin composition comprising an epoxy base resin and a curing agent, which is an oxamidoamine derived from diethyl oxalate and a selected polyoxypropylene diamine. A co-curing agent comprises an aromatic amine and/or aliphatic polyetheramine. The resulting adhesives demonstrate high peel strength and good shear strength.

The invention relates to a curable epoxy resin composition. The composition comprises a base resin curable with a curing amount of an isophthalic acid- derived curing agent having the chemical formula:

$C_6H_4(CONH\text{-}R^1\text{-}CH_2CH_2NH_2)_2$

wherein:
$C_6H_4$ is **meta** phenylene; and
R is an oxyethylene group of the formula $(CH_2CH_2O)_x$
wherein x is 1 to 3
The invention relates also to cured epoxy resins obtained by curing the above-identified compositions and to the use of the isophthalamido amines having the formula given above as curing agents for epoxy resins.

An improved epoxy resin formulation has been discovered. Amidoamines prepared from isophthalic acid and polyoxyethylene diamines were found to be highly reactive in curing epoxy base resins. Although the equivalent weights of these isophthalamidoamines are more than twice that of the precursor amines, their reaction with an epoxy base resin was unexpectedly faster, demonstrated by a shorter gel time.

Strength and modulus properties, e.g. tensile strength and flexural strength, were improved as well.

The epoxy base resin is a vicinal polyepoxide containing compound. Generally the vicinal polyepoxide containing compounds which are amine cured are organic materials having an average of at least 1.8 reactive 1,2-epoxy groups per molecule. These polyepoxide materials can be monomeric or polymeric, saturated or unsaturated, aliphatic, cycloaliphatic, aromatic or heterocyclic, and may be substituted if desired with other substituents besides the epoxy groups, e.g., hydroxyl groups, ether radicals, or aromatic halogen atoms. These vicinal polyepoxide containing compounds typically have an epoxy equivalent weight of 150 to 250. Preferably the base resin, which has an epoxide equivalent weight of from 175 to 195, is derived from condensing epichlorohydrin with 2,2-bis(p-hydroxyphenyl propane) to form 2,2-bis[(p-2,3 epoxy propoxy)phenyl] propane, a derivative of bisphenol A.

Preferred polyepoxides are those of glycidyl ethers prepared by epoxidizing the corresponding allyl ethers or reacting, by known procedures, a molar excess of epichlorohydrin and an aromatic polyhydroxy compound, i.e., isopropylidene bisphenol, novolac, resorcinol, derivatives or aromatic amines, etc. The epoxy derivatives of methylene or isopropylidene bisphenols are especially preferred.

A widely used class of polyepoxides which can be employed according to the present invention includes the resinous epoxy polyethers obtained by reacting an epihalohydrin, such as epichlorohydrin, with either a polyhydric phenol or a polyhydric alcohol. Typically the epoxy resins have an average of at least 1.8 reactive, 1,2-epoxy groups per mole. An illustrative, but by no means exhaustive, listing of suitable dihydric phenols include 4,4'-isopropylidene bisphenol, 2,4-dihydroxydiphenylethylmethane, 3,3'-dihydroxydiphenyldiethylmethane, 3,4'-dihydroxydiphenylmethylpropylmethane, 2,3'-dihydroxydiphenylethylphenylmethane, 4,4'-dihydroxydiphenylpropylphenylmethane, 4,4-dihydroxydiphenylbutylphenylmethane, 2,2'-dihydroxydiphenylditolylmethane, and 4,4'-dihydroxydiphenyltolylmethylmethane. Other polyhydric phenols which may also be coreacted with an epihalohydrin to provide these epoxy polyethers are such compounds as resorcinol, hydroquinone and substituted hydroquinones, eg., methylhydroquinone.

Among the polyhydric alcohols which can be coreacted with an epihalodrin to provide these resinous epoxy polyethers are such compounds as ethylene glycol, propylene glycols, butylene glycols, pentane diols, bis-(4-hydroxycyclohexyl)imethylmethane, 1,4-dimethylolbenzene, glycerol, 1,2,6-hexanetriol, trimethylolpropane, mannitol, sorbitol, erythritol, pentaerythritol, their dimers, trimers and higher polymers, e.g., polyethylene glycols, polypropylene glycols, triglycerol or dipentaerythritol, polyallyl alcohol, polyhydric thioethers, such as 2,2'-, 3,3'-tetrahydroxydipropylsulfide, mercapto alcohols such as monothioglycerol or dithioglycerol polyhydric alcohol partial esters, such as monostearin or pentaerythritol monoacetate and halogenated polyhydric alcohols such as the monochlorohydrins of glycerol, sorbitol, or pentaerythritol.

Another class of polymeric polyepoxides which can be amine cured and employed in accordance with the present invention includes the epoxy novolac resins obtained by reacting, preferably in the presence of a basic catalyst, e.g. sodium or potassium hydroxide, an epihalohydrin, such as epichlorohydrin, with the resinous condensate of an aldehyde, e.g. formaldehyde, and either a monohydric phenol, e.g. phenol itself, or a polyhydric phenol. Further details concerning the nature and preparation of these epoxy novolac resins can be obtained in Lee H and Neville, K Handbook of Epoxy Resins, McGraw Hill Book Co., New York, 1967.

A preferred class of co-curing agents that can be used in accordance with the invention has the formula:

$H_2N-R^2-CH_2CH_2NH_2$

wherein $R^2$ has the formula

$-(CH_2CH_2O)_x$

wherein x is 1 to 3. Diamines of this type are marketed by Texaco Chemical Co., Houston, Texas under the trademark JEFFAMINE$^R$ EDR-series.

The aliphatic polyetheramines which can be utilized as co-curing agents in accordance with the present invention are generally any of those amine curing agents which are well known to be useful for the curing of vicinal epoxides. Generally, those curing agents having at least three reactive amino hydrogens are useful. Of the amine curing agents known to be effective in curing a vicinal epoxy resin, preferred curing agents in accordance with the instant invention are the polyoxyalkylene containing amine compounds. A preferred class of polyoxyalkylene polyamines has the formula:

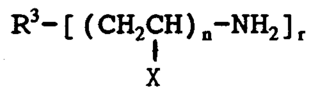

wherein X is hydrogen, methyl or ethyl; $R^3$ is the nucleus of an oxyalkylation susceptible polyhydric alcohol having 2 to 12 carbon atoms and 2 to 8 hydroxyl groups; n is 1 to 15 and r is 2 to 4.

The most preferred polyoxyalkylenepolyamines are a polyoxypropylenediamine having a molecular weight of 230 to 400 and a triamine of molecular weight about 400. These products are available under the tradenames JEFFAMINE$^R$ D-230, JEFFAMINE$^R$ D-400 and JEFFAMINE$^R$ T-403 from Texaco Chemical Co. Their use as curing agents is described in US-A-4189564.

JEFFAMINE$^R$ D-230 is represented by the formula:

$H_2NCH(CH_3)CH_2-[OCH_2CH(CH_3)]_xNH_2$

wherein x averages 2.6.

JEFFAMINE$^R$ T-403 is represented by the formula:

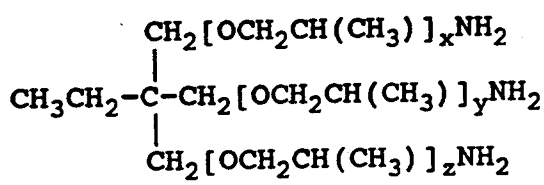

wherein x + y + z averages 5.3.

Before use the co-curing agent is mixed with the amidoamine. In general, small to moderate amounts of the co-curing agent are used for the lower molecular weighr amidoamines. The more flexible higher

molecular weight adducts require larger amounts of the co-curing agent when used the co-curing agent is incorporated with the curing agent in a molar ratio of curing agent: co-curing agent of 1:1 to 1:20. It has been found that the only satisfactory method for determining the proper ratio of amidoamine and co-curing agent involves actually preparing a series of mixtures containing the materials being considered for use in a particular application, in various concentrations, and then reacting the mixture with a vicinal polyepoxide, and curing the reaction product at, for example, 1 hour at 125°C. Samples with ratios of amidoamine: co-curing agent in the range of 1:1 to 1:20 are made up. The properties of cured castings are then tested by standard ASTM methods. The sample with the desired properties for the specific application may then be chosen and an additional set of samples tested over a narrow range containing the chosen sample, in order to produce a custom formulation with desired properties.

The curing agent is usually added to the formulation in such an amount that there is one reactive hydrogen atom in the curing component for each epoxy group in the epoxy resin component. These are known as stoichiometric quantities. The stoichiometric quantity can be calculated from knowledge of the chemical structure and analytical data on the component. Unfortunately, stoichiometry is not always calculable. For the systems of the present invention, the proper amount of curing agent is the amount necessary to provide the best desired properties. In industrial practice the property maximized is either the glass transition point (Tg) or the heat deflection temperature (HDT). This amount must be determined experimentally and can be accomplished by routine procedures known in the art. Generally the number of equivalents of reactive curative groups is from 0.8 to 1.2 times the number of epoxide equivalents present in the curable epoxy resin composition, with from 0.9 to a stoichiometric amount being preferred. The exact amount of constituents in accordance with the above general requirements will depend, as mentioned, primarily on the application for which the cured resin is intended.

Optionally, the epoxy resin formulation of the present invention can include an accelerator to speed the amine cure of the epoxy resin. In several applications, an accelerator is beneficial, especially when an epoxy resin is used as an adhesive in flammable environment, thus making prolonged elevated temperature cure inconvenient or even hazardous. Lee, H. and Neville, K., Handbook of Epoxy Resins, pp. 7-14 describe the use of certain amine-containing compounds as epoxy curing agent-accelerators.

Many accelerators which are known in the art can be utilized in accordance with the present invention. Examples include salts of phenols, salicyclic acid, amine salts of fatty acids such as those disclosed in US-A-268190; and tertiary amines such as those disclosed in US-A-2839480; A preferred accelerator for use in accordance with the instant invention is disclosed in US-A-3875072, and comprises a combination of piperazine and an alkanolamine in a weight ratio of 1:8 to 1:1. The above amount of accelerator is mixed with a polyoxyalkylene diamine curing agent in the amount of from 10 to 50 parts by weight of accelerator to 100 parts by weight of the curing agent.

These epoxy systems may be cured rapidly with heat, to provide a high degree of heat resistance, along with a measure of flexibility. The curing temperature range acceptable in this invention is from 60 to 155°C for up to 5 hours. Preferably curing is carried out at about 125°C for about 3.5 hours.

**EXAMPLE 1**

Isophthalamidoamines were prepared by the same procedure by addition of isophthalic acid to the polyoxyethylene diamine in a molar ratio of 1:2 to 1:2.2. The starting materials were charged to a 2-litre, 3-neck round bottom flask, and heated under nitrogen with stirring to 225°C for 1 to 2 hours at atmospheric pressure and then under vacuum at 133Pa (1mm Hg) for 2 to 4 hours. Most of water was removed during the atmospheric and vacuum distillation.

The isophthalamidoamines prepared from diethylene glycol diamine and triethylene glycol diamine were liquids which crystallized over a period of days. Those prepared from tetraethylene glycol diamine remained viscuous liquids.

The isophthamidoamines and EPON$^R$ 828 epoxy base resin were combined and mixed thoroughly. A small amount of commercial defoaming agent was added. After complete mixing, the resin system was placed under vacuum 133 to 667 Pa (1 to 5mm Hg) until the mixture was thoroughly degassed.

An aluminium mould was preheated to 50°C. Vacuum was discontinued and the mixture was poured into the preheated mould which maintained a 3mm(1/8 inch) spacing by means of TEFLON$^R$ gasket. The casting was cured for 2 hours at 80°C, followed by 3 hours at 125°C. The casting was then removed from the cooled mould and cut into test samples.

The text samples were subjected to tests for flexural and tensile properties. Flexural property tests were according to ASTM D-790. Tensile property tests were according to ASTM D-638.

| Formulation (parts by weight) | 1 | 1 | 2 | 2 |
|---|---|---|---|---|
| Epoxy resin | 100 | 100 | 100 | 100 |
| Isophthalamidoamine | | | | |
| IA + 2 EDR-192 | 65 | | | |
| IA + 2 EDR-148 | | | 9.1 | |
| Cocurative/Curative | | | | |
| EDR-192 | | 25 | | |
| EDR-148 | | | 15 | 20 |

| **Properties of Cured 3mm (1/8-inch) Castings:** (cured 2 hrs. 80°C, 3 hrs. 125°C | | | | | |
|---|---|---|---|---|---|
| Flexural strength, | MPa/psi | 108.9/15800 | 96.5/14200 | 108.3/15700 | 86.9/12600 |
| Flexural modulus, | MPa/psi | 3041/441000 | 2744/398000 | 2758/400000 | 2365/343000 |
| Tensile strength, | MPa/psi | 649/9410 | 57.9/8400 | 49.0/7100 | 61.4/8900 |
| Tensile modulus, | MPa/psi | 3248/471000 | 2475/359000 | 3006/436000 | 2496/362000 |

EEW - Equivalent Epoxy Weight
IA - Isophthalic Acid
JEFFAMINE[R] EDR-148 $H_2N(CH_2CH_2O)_2CH_2CH_2NH_2$
JEFFAMINE[R] EDR-192 $H_2N(CH_2CH_2O)_3CH_2CH_2NH_2$
Epoxy resin - EPON[R] 828 diglycidylether of Bisphenol A liquid resin, epoxy equivalent weight 185-190.

| Formulation (parts by weight) | 3 664 | 3 Comp | 4 | 4 Comp |
|---|---|---|---|---|
| Epoxy resin | 100 | 100 | 100 | 100 |
| Isophthalamidoamine | | | | |
| IA + 2 EDR-104 | 11 | | | |
| IA + 2 D-230 | | | 86 | |
| Cocurative/Curative | | | | |
| EDR-104 | 11 | 14 | | |
| D-230 | | | | 32 |

| **Properties of cured 3mm (1/8-inch) Castings:** (Cured 2 hrs. 80°C, 3 hrs. 125°C) | | | | | |
|---|---|---|---|---|---|
| Flexural strength, | Mpa.psi | 110.3/16000 | 117.9/17100 | 115.8/16800 | 108.3/15700 |
| Flexural modulus | MPa/psi | 2703/392000 | 2910/422000 | 3144/456000 | 3130/454000 |
| Tensile strength, | MPa/psi | 64.8/9400 | 72.4/10500 | 69.0/10000 | 67.6/9800 |
| Tensile modulus, | MPa/psi, | 3103/450000 | 2551/370000 | 3337/484000 | 2875/417000 |

## EXAMPLE 2

EPON[R] 828 epoxy base resin and curing agents were equilibrated separately at 23°C and then combined and mixed thoroughly for 4 to 5 minutes in an amount to give a 200 gram mass. The relative amount of base resin and curing agent was predetermined experimentally to give the highest glass transition point (Tg) for the system.

The gel time for the mixture was measured according to ASTM D-2471-71. Gel time is the time in minutes for the mixed mass to begin the exothermic temperature rise of the epoxidation reaction. Peak temperature is the maximum temperature reached by the 200 gram mass.

Shorter gel times are associated with more reactive systems. The gel times of the isophthalamidoamine systems are shorter than for the polyoxyethylene glycol diamine systems.

| CURING AGENT SOLUTION | | | | | |
|---|---|---|---|---|---|
| Admidoamine | WT% | Co-curing agent | Wt% | Properties of Curing 200g Mass | |
| | | | | Gel time Min | Peak Temp °C |
| 2 EDR-148 + IA | 17 | EDR-148 | 83 | 44 | 231 |
| 2 EDR-148 + IA | 28 | EDR-148 | 72 | 41 | 237 |
| 2 EDR-148 + IA | 37 | EDR-148 | 63 | 32 | 220 |
| 2 EDR-148 + IA | 44 | EDR-148 | 66 | 29 | 201 |
| 2 EDR-148 + IA | 50 | EDR-148 | 50 | 28.5 | 232 |
| 2 EDR-148 + IA | 100 | EDR-148 | 0 | 28 | 100 |
| 2 EDR-148 + IA | 0 | EDR-148 | 100 | 55 | 242 |
| 2 EDR-192 + IA | 100 | EDR-192 | 0 | 24 | 163 |
| 2 EDR-192 + IA | 0 | EDR-192 | 100 | 53 | 229 |
| 2 EDR-104 + IA | 100 | EDR-104 | 0 | 26.5 | 107 |
| 2 EDR-104 + IA | 0 | EDR-104 | 100 | 64 | 237 |
| 2 EDR-104 + IA | 50 | EDR-104 | 50 | 33 | 243 |

## Claims

1. A curable epoxy resin composition comprising a mixture of a vicinal polyepoxide having an average of at least 1.8 reactive 1,2-epoxy groups per molecule; and a curing agent, characterised in that the curing agent has the formula:

   $C_6H_4(CONH\text{-}R^1\text{-}CH_2CH_2NH_2)_2$

   wherein $C_6H_4$ is **meta**-phenylene, and $R^1$ is an oxyethylene group of the formula:

   $-(CH_2CH_2O)_x-$

   wherein x is 1 to 3.

2. A composition according to Claim 1 characterised in that a co-curing agent is employed in a molar ratio of curing agent:co-curing agent 1:1 to 1:20.

3. A composition according to Claim 2 characterised in that the co-curing agent has the formula:

   $H_2N\text{-}R^2\text{-}CH_2CH_2NH_2$

   wherein $R^2$ has the formula:

   $-(CH_2CH_2O)_x-$

   wherein x is 1 to 3.

4. A composition according to Claim 2 characterised in that the co-curing agent has the formula:

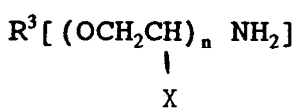

wherein X is hydrogen, methyl or ethyl, $R^3$ is the nucleus of an oxyalkylation susceptible polyhydric alcohol having 2 to 12 carbon atoms and 2 to 8 hydroxyl groups,
n is 1 to 15 and
r is 2 to 4.

**5.** A composition according to any one of Claims 1 to 4 characterised in that it contains an accelerator.

**6.** A cured epoxy resin composition obtained by curing an epoxy resin composition according to any one of Claims 1 to 5.

**7.** Use of an isophthalamido amine of the formula:

$C_6H_4(CONH\text{-}R^1\text{-}CH_2CH_2NH_2)_2$

wherein $C_6H_4$ is meta-phenylene, and R is an oxyethylene group of the formula:

$-(CH_2CH_2O)_x-$

wherein x is 1 to 3,
as a curing agent for epoxy resins.

European Patent Office

# EUROPEAN SEARCH REPORT

Application Number

EP 91 30 9943

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 301 706 (TEXACO DEVELOPMENT CORPORATION) * page 9, example 1; claims 1,8,9,10,11,12; page 2, lines 18,47-50; page 4, line 12; pages 11,12, example 3; page 23, example 3(A), comment; page 24, example 4(A) * --- | 1,2,6,7 | C 08 G 59/54<br>C 08 G 59/56<br>C 08 G 59/50 |
| P,X<br>D | EP-A-0 329 266 (TEXACO DEVELOPMENT CORPORATION) * claims 1,2,3; examples 1,2,4,6,7(D) * --- | 1-4,6,7 | |
| A | US-A-4 814 415 (K.B. SELLSTROM) * claims * ----- | 1 | |
| | | | TECHNICAL FIELDS SEARCHED (Int. Cl.5) |
| | | | C 08 G |

The present search report has been drawn up for all claims

| Place of search | Date of completion of the search | Examiner |
|---|---|---|
| BERLIN | 09-07-1992 | VOIGTLAENDER R O J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)